# EUROPÄISCHE PATENTSCHRIFT

(11) **EP 1 530 941 B1**
(45) Veröffentlichungstag und Bekanntmachung des Hinweises auf die Patenterteilung: **12.09.2007**
(21) Anmeldenummer: 04010766.6
(22) Anmeldetag: 06.05.2004
(51) Int. Cl.: A47J 45/06

(54) **Gefäss zum Kochen von Speisen mit einer Einrichtung zum Anzeigen der erreichten Temperatur**
Cooking utensil with temperature indicating means
Appareil culinaire avec un dispositif indicateur de la température

(30) Priorität: 14.11.2003 IT mi20032201
(43) Veröffentlichungstag der Anmeldung: 18.05.2005
(73) Patentinhaber: BALLARINI PAOLO & FIGLI S.p.A., 46017 Rivarolo Mantovano (MN) (IT)
(72) Erfinder: Ferron, Francesco, 46017 Rivarolo Mantovano (IT)
(74) Vertreter: Mayer, Hans Benno

(56) Entgegenhaltungen:
- WO-A-03/051165
- DE-U- 8 000 212
- FR-A- 2 014 169
- GB-A- 1 110 480

## Beschreibung

Die vorstehende Erfindung betrifft ein Gefäß zum Kochen von Speisen, das mit einer Einrichtung zum Anzeigen der erreichten Temperatur ausgerüstet ist.

Bei der Verwendung von Kochgefäßen ist es während und nach dem Kochvorgang hilfreich, anzuzeigen, dass sich das Kochgefäß noch in erwärmtem Zustand befindet, dass Teile des Kochgefäßes erhitzt sind und dass aus diesem Grunde gewisse Vorsichtsmaßnahmen zu berücksichtigen sind, um Verbrennungen zu vermeiden.

Es befinden sich bereits Kochtöpfe oder Bratpfannen auf dem Markt, die im Inneren des Gefäßes, z.B. auf dem Gefäßboden, in zentraler Lage, eine Beschichtung aufweisen, die thermochromatische Pigmente enthält und durch Verändern Ihrer Farbe anzeigen, dass der Gefäßboden eine gewisse Temperatur erreicht hat.

Diese bekannte Lösung hat aber den Nachteil, dass ausschließlich jene Temperatur angezeigt wird, die in mittiger Zone des Gefäßbodens vorherrscht, wobei die an der Außenseite des Gefäßes angebrachten Bauteile nicht berücksichtigt werden.

Ferner, sofern sich Speisen im Kochgefäß befinden, decken diese die thermochromatische Anzeigevorrichtung ab, da durch die zu kochenden Speisen die Beschichtung mit thermochromatischen Pigmenten abgedeckt wird.

Eine weitere, aus dem Stand der Technik her bekannte Ausführungsform stützt sich auf eine Vorrichtung, die wärmeempfindliche Flüssigkristalle enthält und zum Beispiel in den Stiel oder in die Henkel, die meist aus Kunststoff bestehen und vom Kochgefäß abstehen, eingebaut sind.

Diese bekannte Vorrichtung, der wärmeempfindliche Flüssigkristalle zugeordnet sind, zeigt die erreichte Temperatur an, wobei diese Temperatur stets im Inneren des Kochgefäßes gemessen wird. Diese bekannte Vorrichtung weist einen verhältnismäßig komplexen Aufbau auf und ist deshalb aufwändig in seiner Anschaffung. Ferner besteht die Gefahr, dass diese Vorrichtung während der Verwendung des Kochgefäßes beschädigt wird, da an den Gefäßflächen, in denen der Kochvorgang erfolgt, sehr hohe Temperaturen vorherrschen, oder die Feuchtigkeit und die Wärme, die sich im Inneren einer Geschirrspülmaschine entwickelt, zu Beschädigung führen kann.

Ferner ist aus GB 1.110.480 ein Kochgefäß bekannt geworden, das mit einer Vorrichtung ausgerüstet ist, die die Gebrauchstemperatur des Kochgefäßes anzeigt. In das Anschlussstück aus Metall, das mit dem Körper des Kochgefäßes in Verbindung steht und einen wärmeisolierenden Griff aufnimmt, werden mehrere Ausnehmungen eingebracht und in diese Ausnehmungen wird ein Farbstoff eingefüllt, der thermochromatische Eigenschaften aufweist.

In die Ausnehmung kann ferner ein Kunststofffilm oder ein Papierzuschnitt eingebracht werden, der vorab mit einer Beschichtung zum Anzeigen der im Kochgefäß vorherrschende Temperatur beschichtet ist.

Es ist Aufgabe der vorstehenden Erfindung, die Nachteile des Standes der Technik zu vermeiden und ein Kochgefäß für die Zubereitung von Speisen vorzuschlagen, das eine verbesserte Einrichtung zum Anzeigen der erreichten Temperatur aufweist, wobei die Einrichtung auf der Außenseite des Kochgefäßes angeordnet ist und mit einfachen Verfahren an außenliegenden Bauteilen des Kochgefäßes anbringbar ist.

Diese Aufgabe wird mit einem Kochgefäß für die Zubereitung von Speisen nach dem unabhängigen Anspruch 1 erreicht.

Weitere Merkmale der Erfindung können der folgenden Beschreibung sowie den Unteransprüchen entnommen werden.

Der Erfindungsgegenstand wird nun genauer beschrieben und anhand eines Ausführungsbeispieles in der beigefügten Zeichnung dargestellt.

Figur 1 zeigt schematisch, in einer Draufsicht, eine Pfanne mit einem Pfannenstiel sowie mit einer Beschichtung gemäß der vorstehenden Erfindung.

Figur 2 zeigt schematisch eine Anzahl von Etiketten zur Temperaturanzeige, die an der Außenseite der Pfanne anbringbar sind.

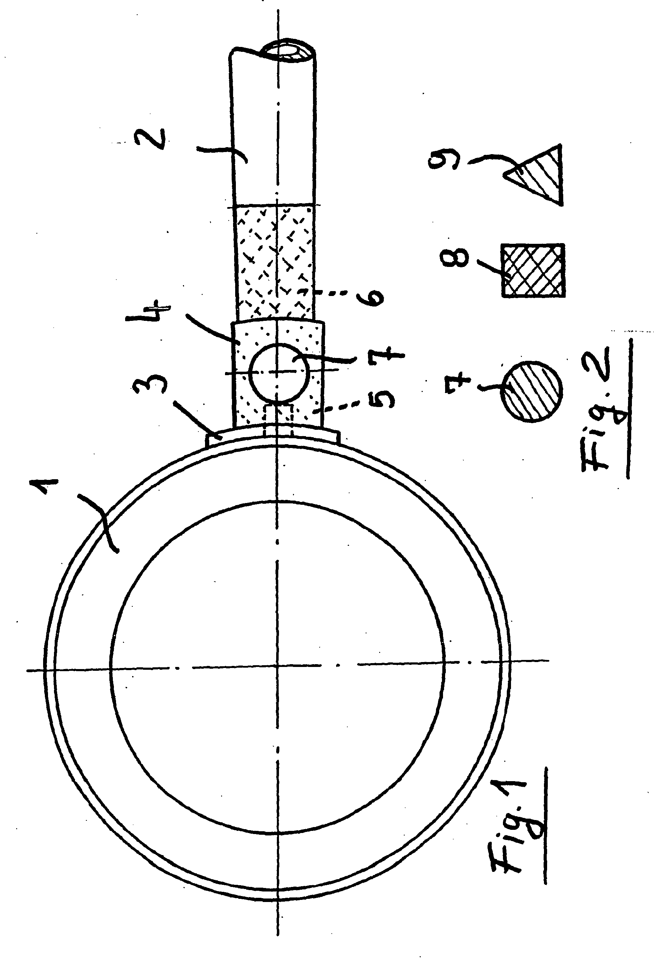

Der Figur 1 kann eine Bratpfanne 1 in Draufsicht entnommen werden. Diese Bratpfanne ist mit einem Pfannenstiel 2 ausgerüstet.

In vorteilhafter Weise weist die Innenfläche der Pfanne 1 eine Antihaftbeschichtung auf.

Unter Zuhilfenahme einer bekannten Montageplatte 3 wird mit dem Körper der Pfanne 1 eine Flammschutzvorrichtung verbunden. Diese Vorrichtung ist mit 4 gekennzeichnet.

Sowohl die Montageplatte, als auch die Flammschutzvorrichtung 4 sind in Metall ausgeführt.

Selbstverständlich sind auch andere Montageeinrichtungen bekannt, so kann zum Beispiel eine Schraube Verwendung finden, die am Körper der Pfanne angeschweißt ist und ein Befestigen des Pfannenstieles, unter Zuhilfenahme einer Schraubenverbindung, ermöglicht.

Vom Flammenschutz 4 steht ein rohrförmiger Körper ab, der einen Stiel 2 aus Metall oder Holz oder einem geeigneten Kunststoff aufnimmt.

Spricht man von Bratpfannen, ist naheliegend, dass sich die Erfindung auch auf andere Kochgefäße erstreckt, zum Beispiel auf Kochtöpfe, Kasserolen und ähnliche Behältnisse.

Die außenliegenden Bauteile des Behälters 1 sind mit einer Beschichtung versehen, die thermochromatische Pigmente enthält, die unterschiedliche Wärmeempfindlichkeit aufweisen.

Beschichtungen dieser Art sind mit Pigmenten angereichert, die entsprechend der erreichten Temperatur ihre Farbe verändert, um zum Beispiel von einer ursprünglich schwarzen Einfärbung (dann, wenn sich das Gefäß 1 auf Zimmertemperatur befindet) bis zu einer Verfärbung in rot oder orange-rot führt, sobald das Kochgefäß erhitzt ist, und zum Beispiel eine Temperatur von 150°C bis 240°C erreicht hat.

Beschichtungen, die thermochromatische Pigmente enthalten, sind aus dem Stand der Technik bekannt und werden zum Beispiel hergestellt von der Firma Keystone.

Der Figur 1 kann entnommen werden, das es verschiedene Möglichkeiten gibt, die im Inneren des Gefäßes 1 vorhandene Temperatur festzustellen und aufzuzeigen.

So besteht zum Beispiel die Möglichkeit, den rohrförmigen Körper 4, der die Flammschutzeinrichtung bildet, vor dessen Montage unter Zuhilfenahme der Platte 3 mit einer Beschichtung 5 zu versehen, die thermochromatische Pigmente enthält.

Es ist auch möglich, die thermochromatische Pigmente enthaltende Beschichtung an anderer Stelle des Kochgefäßes anzubringen, sofern dies technisch möglich erscheint.

Eine weitere Möglichkeit ist darin zu sehen, den Stiel 2 des Gefäßes mit einer Beschichtung zu versehen, die thermochromatische Pigmente enthält, und schließlich besteht auch die Möglichkeit, unter Zuhilfenahme eines Klebers, am Körper der Flammschutzvorrichtung 4 oder am Stiel 2 des Gefäßes ein Etikett 7 anzubringen, das eine Beschichtung mit thermochromatischen Pigmenten enthält.

Die Verwendung eines Etikettes 7 hat den Vorteil, dass nach einem bestimmten Verwendungszeitraum des Kochgefäßes 1 und nach einer Abnutzung oder Beschädigung der thermochromatische Pigmente aufweisenden Beschichtung, das Etikett 7 abgenommen werden kann, um durch ein neues Etikett ersetzt zu werden.

Die Etiketten haben ferner den Vorteil, dass sie in Gross-Serie zu niedrigen Kosten hergestellt werden können und rasch und einfach am Kochgefäß anbringbar sind.

Erfindungsgemäß weisen die Etiketten, die thermochromatische Pigmente aufnehmen, unterschiedliche Formen auf, um eine bessere Erkennung zu gewährleisten. Wie in Figur 2 dargestellt, weist das Etikett 7 Kreisform auf, das Etikett 8 kann quadratische Form aufweisen und das Etikett 9 kann zum Beispiel Dreiecksform aufweisen.

Die unterschiedliche Formgebung der Etiketten 7, 8 und 9 ermöglicht eine einfache Verwendung der Etiketten, wenn diese unterschiedliche thermische Empfindlichkeit aufweisen. So kann zum Beispiel ein Etikett mit thermochromatischen Pigmenten beschichtet sein, die ihre Farbe bei Erreichen einer Temperatur um 80-100°C verändert.

Ein anderes Etikett kann eine Beschichtung aufweisen, die die Farbe bei Erreichen einer Temperatur um 150°C verändert und ein letztes Etikett kann eine thermochromatische Pigmentierung enthalten, die die Farbe ab 180°C bis 240°C verändert - dies nur als Beispiel.

Der große Vorteil der mit der erfindungsgemäßen Lösung erreicht wird, ist darin zu sehen, dass die Einrichtungen für die thermische Anzeige an der Außenseite des Kochgefäßes angeordnet sind.
Die Beschichtung zur Anzeige der vorhandenen Temperatur kann an verschiedenen außenliegenden Stellen oder Bauteilen des Kochgefäßes, zum Beispiel an der vorstehenden Flammschutzvorrichtung, an der Montageplatte für die Flammschutzvorrichtung oder direkt am Stiel des Gefäßes, der in das rohrförmige Bauteil des Flammschutzkörpers eingesetzt ist, angeordnet sein. Es bietet sich auch die Möglichkeit, in benachbarten Zonen des Kochgefäßes, die Beschichtung mit den thermochromatischen Pigmenten, die auf verschiedene Temperaturen ansprechen, anzubringen.

Mit besonderem Vorteil wird die Beschichtung zum Anzeigen des Wärmezustandes des Kochgefäßes mit einem Spritzverfahren aufgebracht.

Es hat sich ferner als vorteilhaft erwiesen, dass die Beschichtung, die die thermochromatischen Pigmente enthält, durch ein Siebdruckverfahren aufgebracht wird.

Ferner hat es sich als vorteilhaft erwiesen, die Beschichtung, die die thermochromatischen Pigmente enthält, mit einem Pufferverfahren aufzubringen. Und schließlich könnte es vorteilhaft sein, und auch möglich, die Beschichtung, die die thermochromatischen Pigmente enthält, unter Verwendung von Abziehbildern aufzubringen.

## Patentansprüche

1. Kochgefäß (1) zum Zubereiten von Nahrungsmitteln, mit Bauteilen (2, 3, 4), die an der Außenseite des Gefäßes (1) angeordnet sind, an denen ein Etikett angebracht ist, welches eine Beschichtung aufweist, die thermochromatische Pigmente enthält, **dadurch gekennzeichnet, dass** das Etikett unterschiedliche Formen aufweist und diesen unterschiedlichen Formen jeweils unterschiedliche thermische Empfindlichkeiten der Pigmente zugeordnet sind.

2. Kochgefäß, nach Patentanspruch 1, **dadurch gekennzeichnet, dass** die Beschichtung, die thermochromatische Pigmente enthält, mittels eines Spritzverfahrens aufgebracht wird.

3. Kochgefäß, nach Patentanspruch 1, **dadurch gekennzeichnet, dass** die Beschichtung, die thermochromatische Pigmente enthält, unter Anwendung eines Siebdruckverfahrens aufgebracht wird.

4. Kochgefäß, nach Patentanspruch 1, **dadurch gekennzeichnet, dass** die Beschichtung, die thermochromatische Pigmente enthält, mittels Pufferverfahren aufgebracht wird.

5. Kochgefäß, nach Patentanspruch 1, **dadurch gekennzeichnet, dass** die Beschichtung, die thermochromatische Pigmente enthält, unter Einsatz von Abziehbildern aufgebracht wird.

## Claims

1. Cooking vessel (1) for preparing food, comprising components (2, 3, 4) which are arranged on the outside of the vessel (1) and to which a sticker is attached which has a coating which contains thermochromatic pigments, **characterized in that** the sticker has different shapes, and different thermal sensitivities of the pigments are associated with each of these different shapes.

2. Cooking vessel according to Patent Claim 1, **characterized in that** the coating which contains thermochromatic pigments is applied by means of a spraying method.

3. Cooking vessel according to Patent Claim 1, **characterized in that** the coating which contains thermochromatic pigments is applied using a screenprinting method.

4. Cooking vessel according to Patent Claim 1, **characterized in that** the coating which contains thermochromatic pigments is applied by means of buffering methods.

5. Cooking vessel according to Patent Claim 1, **characterized in that** the coating which contains thermochromatic pigments is applied using decals.

## Revendications

1. Ustensile de cuisson (1) destiné à préparer des aliments, qui présente des composants (2, 3, 4) disposés sur le côté extérieur de l'ustensile (1) et sur lesquels est appliquée une étiquette qui présente un revêtement qui contient des pigments thermochromes, **caractérisé en ce que** l'étiquette présente différentes formes et **en ce que** des sensibilités thermiques différentes des pigments sont associées à ces différentes formes.

2. Ustensile de cuisson selon la revendication 1, **caractérisé en ce que** le revêtement qui contient des pigments thermochromes est appliqué par une opération de projection.

3. Ustensile de cuisson selon la revendication 1, **caractérisé en ce que** le revêtement qui contient des pigments thermochromes est appliqué en utilisant une opération de sérigraphie.

4. Ustensile de cuisson selon la revendication 1, **caractérisé en ce que** le revêtement qui contient des pigments thermochromes est appliqué au tampon.

5. Ustensile de cuisson selon la revendication 1, **caractérisé en ce que** le revêtement qui contient des pigments thermochromes est appliqué en utilisant des décalcomanies.
